# EUROPEAN PATENT APPLICATION

(11) **EP 2 424 090 A2**
(43) Date of publication of application: **29.02.2012**
(21) Application number: 11176744.8
(22) Date of filing: 05.08.2011
(51) Int. Cl.: H02M 1/36

(54) **Soft start method and apparatus for a bidirectional DC to DC converter**

(30) Priority: 30.08.2010 US 378325 P; 26.04.2011 US 94007
(71) Applicant: Intersil Americas Inc., Milpitas, CA 95035 (US)
(72) Inventor: Moussaoui, Zaki, San Carlos, CA California 94070 (US); Qin, Jifeng, San Jose, CA California 95131 (US); Buxton, Joseph, Palo Alto, CA California 94306 (US)
(74) Representative: Harrasz, Julia Konstanze

(57) **Abstract**

A system and method for reducing negative inductor current during soft start of a bidirectional direct current (DC) - to-DC converter is provided. Typically, the bidirectional DC- to-DC converter includes an active switch and a passive switch. The system employs a soft start circuit that controls the duty cycle of the passive switch during soft start of the active switch. In one aspect, the soft start circuit gradually increases the duty cycle of the passive switch from zero to a steady state value, and provides a soft start for the passive switch concurrently/simultaneously during the soft start of the active switch. Moreover, the soft start circuit disclosed herein can avoid the reverse transient inductor current during start-up, prevent system damage and make the design of the bidirectional DC- to-DC converter more robust.

## Description

### CROSS REFERENCE TO RELATED APPLICATIONS

This application claims priority to U. S. Provisional Patent Application Serial No. 61/378,325, filed on August 30, 2010, and entitled "SOFT START METHOD FOR A BI-DIRECTIONAL DC TO DC CONVERTER," the entirety of which is incorporated by reference herein.

### BRIEF DESCRIPTION OF THE DRAWINGS

The numerous aspects, embodiments, objects and advantages of the present invention will be apparent upon consideration of the following detailed description, taken in conjunction with the accompanying drawings, in which like reference characters refer to like parts throughout, and in which:

FIG. 1 illustrates an example system that provides an improved soft start technique for bidirectional converters;

FIG. 2 illustrates an example bidirectional direct current (DC)-DC step down converter with improved soft start;

FIG. 3 illustrates an example system utilized for power generation in hybrid electrical vehicle (HEV) and/or electrical vehicle (EV) systems;

FIG. 4 illustrates an example bidirectional DC-DC step up (boost) converter with improved soft start;

FIG. 5 illustrates an example two-stage isolated bidirectional DC-DC converter that reduces negative current flowing from the output to the input of the converter;

FIGs. 6A and 6B illustrate an example soft start circuit utilized to control the duty cycle of a passive switch, and signal waveforms at various nodes in the soft start circuit, respectively;

FIG. 7 illustrates an example system that soft starts a passive switch in a bidirectional DC-DC converter;

FIG. 8 illustrates an example methodology for reducing negative transient current in bidirectional DC-DC converters; and

FIG. 9 illustrates an example methodology for an improved soft start mechanism in bidirectional DC-DC converters.

### DETAILED DESCRIPTION OF THE INVENTION

The soft start techniques disclosed herein can be extensively employed in various industries, for example, industrial automation, automotive, *etc.,* to reduce input inrushing current of direct current (DC) to DC (DC-DC) converters at startup. Typically, the systems and methods disclosed herein prevent large current surges, which can damage circuits, such as metal―oxide―semiconductor field-effect transistor (MOSFET) switches that depend on stable supply voltages. To avoid the damaging current surges, soft start circuits disclosed herein delay a complete startup of the converter by linearly increasing the duty cycle of a Pulse Width Modulator (PWM) until the output of the converter reaches a desired operational level (*e.g.*, steady state value). Moreover, for a synchronous structure (e.g., bidirectional step-up converter, bidirectional step-down converter, two stage isolated bidirectional DC-DC converter, *etc.)* that employs a MOSFET instead of freewheeling diode, the systems and methods disclosed herein reduce/prevent a large negative current, which can damage the system because the energy can flow in both directions.

In one aspects, the systems and methods disclosed herein provide an improved soft start technique for a passive switch (e.g., MOSFET), utilized in any bidirectional DC-DC converter topology, that prevents a high negative transient inductor current during start-up/reset and thus avoids damaging system components. The subject matter is described with reference to the drawings, wherein like reference numerals are used to refer to like elements throughout. In the following description, for purposes of explanation, numerous specific details are set forth in order to provide a thorough understanding of the subject innovation. It may be evident, however, that the subject matter may be practiced without these specific details. In other instances, well-known structures and devices are shown in block diagram form in order to facilitate describing the subject innovation.

Moreover, the word "exemplary" is used herein to mean serving as an example, instance, or illustration. Any aspect or design described herein as "exemplary" is not necessarily to be construed as preferred or advantageous over other aspects or designs. Rather, use of the word "exemplary" is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. In addition, the word "coupled" is used herein to mean direct or indirect electrical or mechanical coupling.

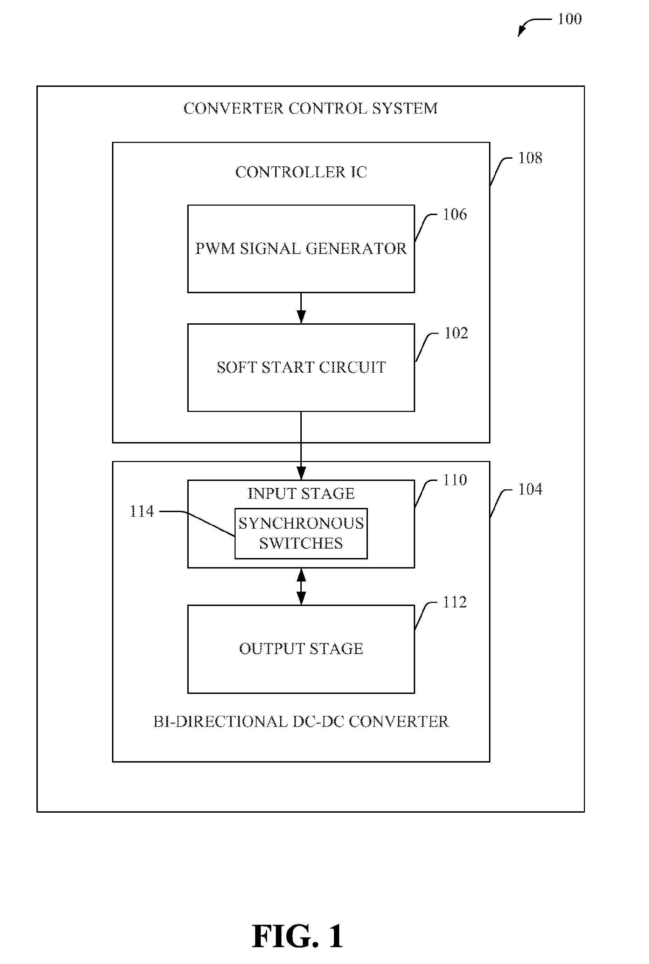

Initially, referring to FIG. 1, there illustrated is an example converter control system 100 that provides an improved soft start technique for bidirectional converters, according to an aspect of the subject disclosure. In particular, an embodiment of system 100 can process large reverse transient inductor current during start-up and prevent the system from sustaining damage. The system 100 can be implemented into any bidirectional converter topology as well as any two stage synchronized converter topology, utilized in any applications, such as, but not limited to industrial systems, automotive systems, robotics, telecommunications, etc.

In bidirectional and/or synchronous structures with MOSFET switches 114 energy can flow in both directions causing huge negative current at power up and damage the system. To prevent these negative surges at power up, system 100 includes a soft start circuit 102 coupled to an input stage 110 of a bidirectional DC-DC converter 104. Typically, the bidirectional DC-DC converter 104 can include most any bidirectional topology, including, but not limited to, non-isolated and/or isolated topologies. In one example, the non-isolated topologies can comprise, but are not limited to, buck, boost, buck-boost, Ćuk, and/or charge pump converters, which are used for either step up or voltage inversion. In another example, the isolated topologies can comprise two-stage isolated bidirectional DC-DC converter, such as, but not limited to, fly-back, fly-forward, half bridge, full bridge and/or dual full bridge topologies.

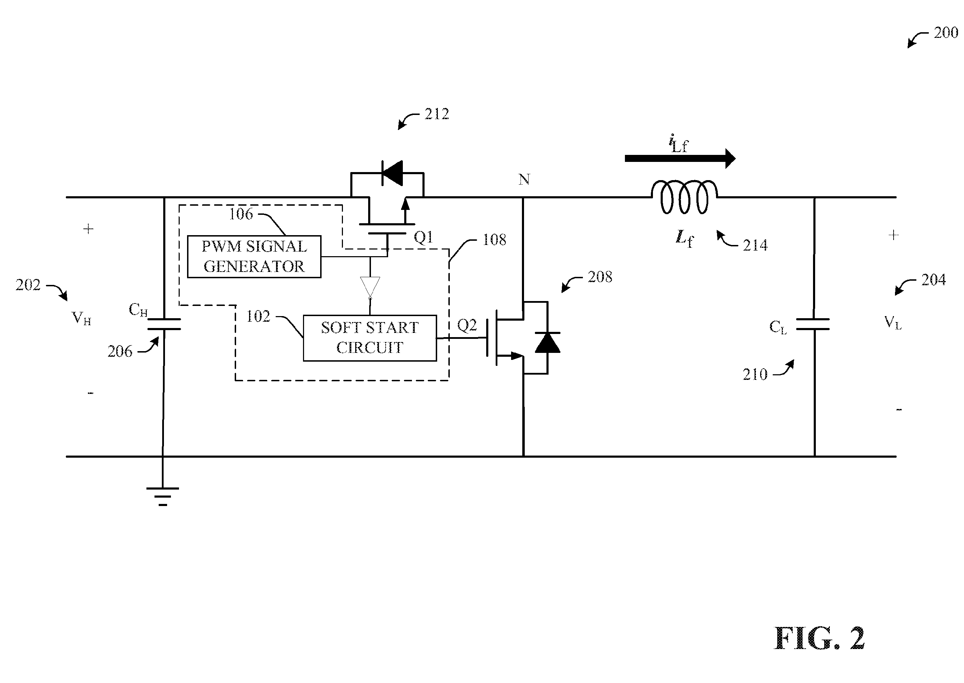

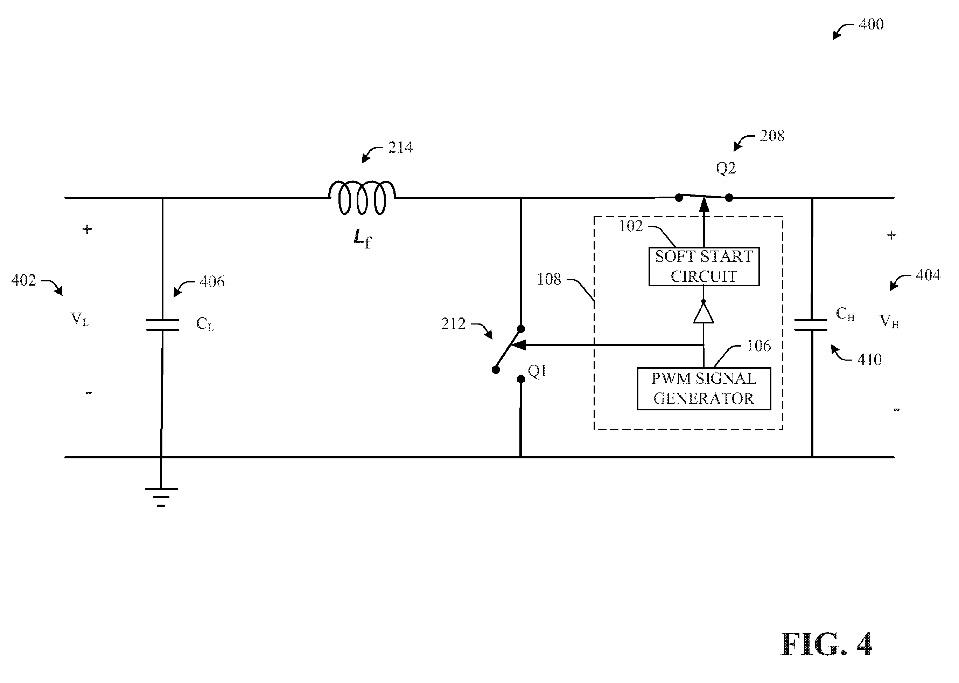

Typically, the input stage 110 of the bidirectional DC-DC converter 104 can include two synchronous switches 114, namely, an active switch and a passive switch, (shown in detail with respect to FIGs. 2 and 4) driven by a pulse width modulated (PWM) signal, generated by the PWM signal generator 106. Further, the input stage can be coupled to a output voltage at the output stage 112. In one example, the switches 114 can be implemented by employing MOSFETs. Moreover, during a continuous conduction mode (CCM) of operation, the active switch is "ON," when the passive switch is "OFF" and the active switch is "OFF," when the passive switch is "ON." In addition, there can be some "deadtime" in between, during which both the active switch and the passive switch are "OFF" to prevent current shoot-through through both the MOSFETs 114. To avoid negative current surges in the bidirectional DC-DC converter 104, system 100 employs the soft start circuit 102. Moreover, the soft start circuit 102 generates an output signal, based on a PWM signal provided by the PWM signal generator 106, which controls the switching of the passive switch during startup. For example, at power up, the soft start circuit 102 adjusts the duty cycle of the passive switch and gradually increases the duty cycle of the passive switch from zero to a steady state. Since passive switch's duty cycle gradually increases, in the same way as the active switch's duty cycle, inductor current in the bidirectional DC-DC converter 104, changes smoothly and huge reverse or transient inductor current are prevented.

It can be appreciated that although the PWM signal generator 106 and the soft start circuit 102 are depicted to reside within a single integrated circuit (IC) chip, namely, controller IC 108, the PWM signal generator 106 and the soft start circuit 102 can reside on multiple ICs. Further, it can be appreciated that the mechanical design of system 100 can include different component selections, component placement, dimensions, topologies, *etc.,* to achieve a control signal that gradually increases the duty cycle of the passive switch from zero to steady state. Furthermore, it can be appreciated that the soft start circuit 102, the bidirectional DC-DC converter 104 and the PWM signal generator 106 can include most any electrical circuit(s) that can include components and circuitry elements of any suitable value in order to implement the embodiments of the subject innovation. Furthermore, it can be appreciated that the system 100 can be implemented on one or more integrated circuit (IC) chips.

Referring now to FIG. 2, there illustrated is an example bidirectional DC-DC step down converter 200 with improved soft start, according to an aspect of the specification. The step down converter typically includes an inductor (L_{f}) 214 and two switches (*e.g.*, comprising two transistors) that control the inductor. The switches Q₁ 212 and Q₂ 208 can be MOSFET switches, illustrated in FIG. 2, with the body diodes of the MOSFETs shown. Specifically, the switches alternate between connecting the inductor to a source voltage to store energy in the inductor, and discharging the inductor into the load. In one example, switch Q₁ 212 is termed as an "active switch", since Q₁ 212 is a switching element required for operation of the DC-to-DC converter (unidirectional and/or bidirectional). Additionally, Q₂ 208 is termed as a "passive switch", since Q₂ 208 is an optional switching element required only during operation of a bidirectional DC-to-DC converter (*e.g*., a free wheeling diode can be utilized instead of a passive switch for unidirectional DC-to-DC converter operation).

The exemplary converter 200 is employed in a variety of configurations in which a soft start method would be advantageous. In one exemplary configuration, depicted in FIG. 2, the input and output of the converter are connected to batteries, wherein the input voltage is higher than the output voltage. Moreover, the input stage is termed as the high voltage side (V_{H}) 202 and the output stage is termed as the low voltage side (V_{L}) 204. As an example, the bidirectional converter 200, employing the above described configuration can be utilized in an electric automobile, in which the battery at V_{L} (204) would be substituted for an electric motor, to propel the vehicle. In addition, the synchronous buck style bidirectional converter 200 includes a high side capacitor (C_{H}) 206, a transistor (Q₂) 208, and a low side capacitor (C_{L}) 210 in parallel to V_{H} and V_{L}. A transistor (Q₁) 212 and an inductor (L_{f}) 214 are in series between the positive terminal of C_{H} 206 and node N, and node N and the positive terminal of C_{L} 204.

In one embodiment, Q₁ (212) and Q₂ (208) are complimentary switches, wherein Q₁ (212) is defined as an active switch and Q₂ (208) is defined as a passive switch. Moreover, when Q₁ (212) is turned "ON," Q₂ (208) switches "OFF," and when Q₁, (212) is switched "OFF," Q₂ (208) is turned "ON." Saturation and damage to the circuit can occur when the duty cycle of Q₁ (212) is gradually increased from zero to steady state, for example at start up, for example, by employing a PWM signal generated by a PWM signal generator 106 to control the duty cycle of Q₁ (212). Because the duty cycle of Q₂ (208) is complimentary (*e*.*g*., an inverted version) of the duty cycle of Q₁ (212), the duty cycle of Q₂ (208) will be near 100% at the beginning of the soft start. As a result, voltage V_{H} -V_{L} is applied to the inductor L_{f} (214) with a low duty cycle (e.g., short time in an "ON state" per cycle) while voltage V_{L} is applied to the inductor L_{f} (214) with a high duty cycle (e.g., long time in the "ON state" per cycle). Eventually, the negative inductor current I_{LF} increases in a rapid manner, and the inductor L_{f} (214) becomes saturated, subjecting the converter to damage by a large uncontrolled reverse current.

In one aspect, the soft start circuit 102 employed by system 200, can prevent saturation of the inductor, by controlling the duty cycle of Q₂ (208). As an example, the soft start circuit 102 drives the passive switch and gradually increases the duty cycle of the passive switch Q₂ (208), from zero to a steady state value. Moreover, the soft start circuit 102 generates an output signal that initially switches Q₂ (208) "ON" for only a fraction of time when Q₁ (212) is "OFF", and gradually increases the time for which Q₂ (208) is kept "ON", until Q₂ (208) is kept "ON" for all or substantially all the time that Q₁ is "OFF". Since the duty cycle of Q₂ (208) gradually increases in the same way as the duty cycle of Q₁ (212), the inductor current I_{LF} changes smoothly, and a huge reverse inductor current is avoided.

It can be appreciated that the capacitors C_{H} 206 and C_{L} 204 can have suitable capacitance values (or ratios) depending on the application. Further, inductor L_{F} 214 can have most any inductance value depending on the application. In one example, although switches Q₁ (212) and Q₂ (208) are depicted as MOSFETs, the subject specification is not so limited and most any type of switch can be employed.

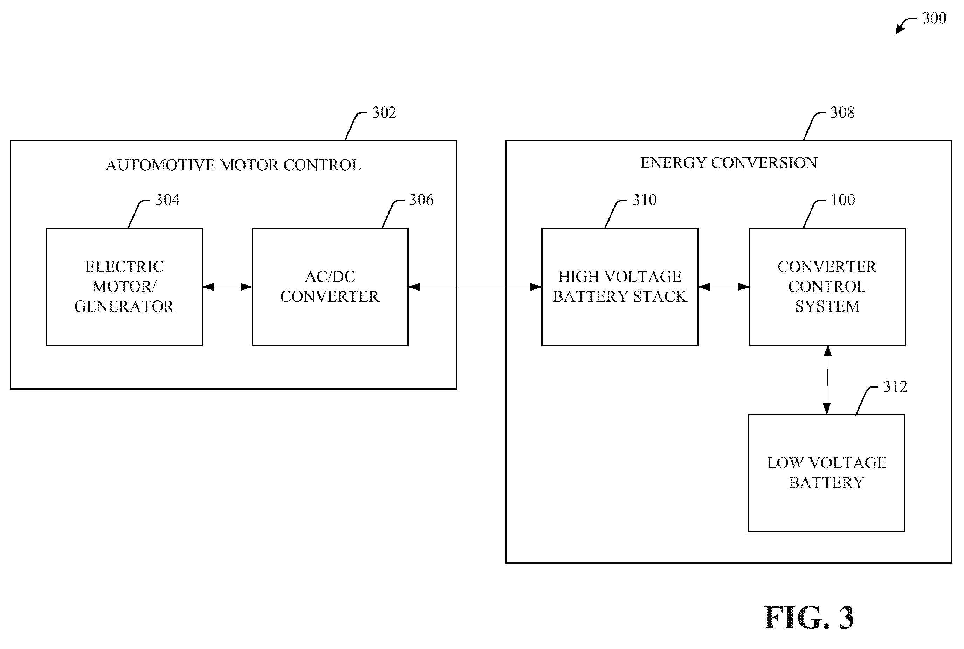

FIG. 3 illustrates an example system 300 utilized for power generation in hybrid electrical vehicle (HEV) and/or electrical vehicle (EV) systems. In one aspect, a 200-400V high voltage battery stack 310 is used as energy storage at the input stage in the converter control system and a low voltage 12V battery 312 is connected to the output stage in the converter control system. The charging of the high battery pack 310 is done through an isolated AC-DC converter 306, connected to the electric motor/ generator 304, whereas the charging of the low battery pack 312 is done through an isolated DC-DC converter within the converter control system 100. Given the large fluctuation of the high voltage battery pack 310, oftentimes a pre-regulator can be inserted between the low voltage battery 312 and the input of the isolated DC-DC converter within the converter control system 100, such that the transformer designs can be optimized.

In one aspect, the converter control system 100 links the different DC voltage buses and transfers energy back and forth. For example, the converter control system 100 can facilitate conversion of the high voltage (e.g., 200-300V) in the main battery to low voltage (*e*.*g*., 12V) for use in electrical equipment in the HEV. In another example, the converter control system 100 can facilitate conversion of a battery voltage (e.g., 300V to 500V) and supply the converted voltage to a drive motor in the HEV. Specifically, the converter control system 100 ensures that large negative current surges at startup are avoided and/or substantially reduced by employing a soft start circuit, which controls the duty cycle of a passive switch of the converter control system 100, during a soft start of an active switch of the in the converter control system 100.

FIG. 4 illustrates an example bidirectional DC-DC step up (boost) converter 400 with improved soft start in accordance with an aspect of the disclosure. The step-up converter 400 can be a power converter with an output DC voltage (V_{H}) 404 greater than its input DC voltage (V_{L}) 402. Typically, most any DC sources, such as, but not limited to, batteries, solar panels, rectifiers, DC generators, *etc.,* can be utilized at the input and/or output side. Typically, system 400 can be utilized in various applications, such as, but not limited to, hybrid electric vehicles (HEV) and/or lighting systems. In addition, switches Q₁ (212) and Q₂ (208) can be implemented by utilizing most any electrical circuit elements, such as, but not limited to transistors, (e.g., MOSFETs).

According to an aspect, the operation of the step-up converter 400 is based on the tendency of an inductor to resist changes in current. Moreover, when inductor L_{F} 214 is charged, it stores energy, and when L_{F} 214 is discharged, it acts as an energy source. The voltage generated by L_{F} 214 during the discharge phase is a function of the rate of change of current, and not the original charging voltage, thus allowing different input and output voltages. Specifically, when Q₂ (208) is "OFF" *(e.g.,* open) and Q₁ (212) is "ON" *(e.g.,* closed), the inductor current increases. Alternatively, when Q₂ (208) is "ON" (*e.g.,* closed) and Q₁ (212) is "OFF" (*e*.*g*., open), energy accumulated in the inductor is discharged through the capacitor C_{H} 410.

Typically, a soft start technique is utilized to gradually increase the duty cycle of the active switch Q₁ (212) from zero to steady state. At the beginning of the soft start, the duty cycle of the passive switch Q₂ (208) (*e*.*g*., inverted active duty cycle) is too large (near 100%) and thus, the soft start circuit 102 is employed to prevent large negative inductor currents. The soft start circuit 102 gradually increases the duty cycle of Q₂ (208) from zero to a steady state value. For example, the time for which Q₂ (208) is closed ("ON"), is slowly increased over multiple switching cycles, until a steady state duty cycle is reached. In one aspect, the soft start circuit 102 modifies a PWM signal to control the duty cycle of Q₂ (208), such that Q₂ (208) is switched "ON" for only a portion of time when Q₁ (212) is switched "OFF" and wherein the portion of time is gradually increased until Q₂ (208) is switched "ON" for all or substantially all the time when Q₁ (212) is switched "OFF".

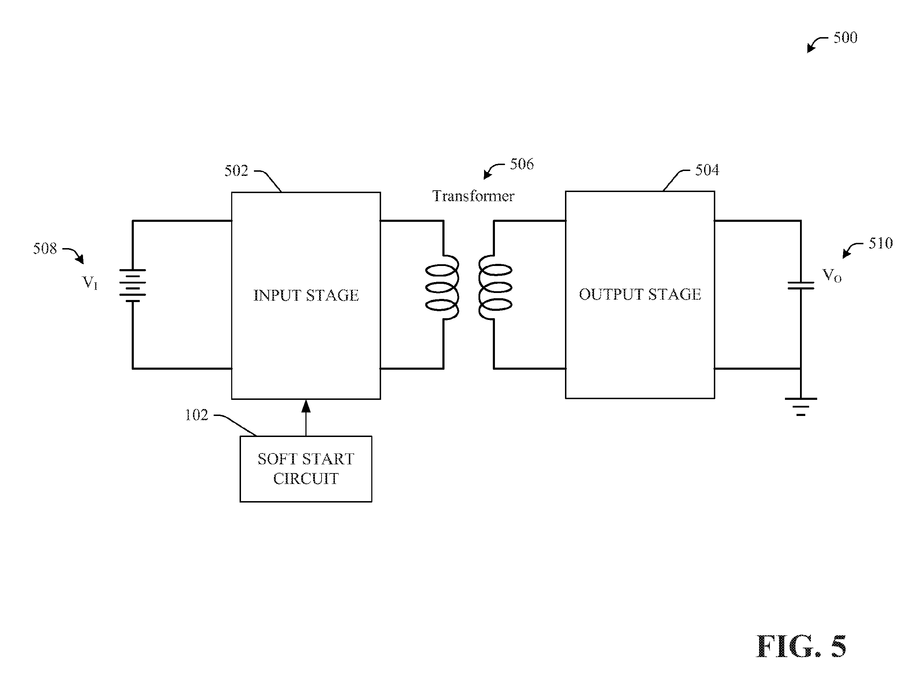

Referring now to FIG. 5, there illustrated is an example two-stage isolated bidirectional DC-DC converter 500 that reduces negative current flowing from the output to the input of the converter in accordance with an aspect of the innovation. In one example, the first/input stage 502 can include, but is not limited to, a pre-regulator, bidirectional buck/boost converter, *etc.* and the second/output stage 504 can include, but is not limited to, a full bridge, half bridge, push pull circuits, *etc.* Typically, isolation between the two stages (502, 504) is achieved by employing a transformer 506. As an example, isolation can be provided to satisfy safety requirements, especially for high power levels. Further, the input stage 502 can be connected to a voltage source, for example, battery 508 with input voltage V_{I}, and the output stage 504 can be connected to another voltage source, for example, battery 510 with output voltage Vo.

According to an aspect, the input stage 502 can include an active switch 212 and a passive switch 208 that are soft started during the same time, by employing soft start circuit 102. Moreover, during soft start of the active switch, soft start circuit 102 gradually increases the duty cycle of the passive switch from zero to steady state, by limiting the time for which the passive switch is turned "ON." As an example, if switching frequency for the active and passive switches is 100 KHz, the switching period is 10 microseconds. Further, if the steady state duty cycle of the active switch is 20%, for example, the active switch is "ON" for approximately 2 microseconds and the passive switch is "ON" for approximately 8 microseconds (including about 100 nanoseconds-200 nanoseconds of "deadtime" for 100 kHz switching, when both switches are "OFF"). During power up, the duty cycle of the active switch is gradually increased from zero to 20%. Conventionally, at this stage, for example, for the first several cycles, the passive switch will remain "ON" for a large amount of time (with duty cycle 99% to 80%). This can cause a large negative current flow from the output stage 504 to the input stage 502 that can damage the battery 508 and/or other components of the system 500. However, soft start circuit 102 ensures that the time for which the passive switch is turned "ON" is limited during the first few cycles and provides a soft start for the passive switch simultaneously/concurrently during the soft start of the active switch.

In one example, system 500 can be utilized in a bidirectional DC-DC converter within HEVs for linking different DC voltage buses and transferring energy back and forth. For example, a DC-DC converter can convert the high voltage (e.g., 200-300V) in the main battery to low voltage (*e*.*g*., 12V) for use in electrical equipment in the HEV. In another example, a DC-DC converter can convert a battery voltage (e.g., 300V to 500V) and supply the converted voltage to a drive motor in the HEV. It can be appreciated that the input stage 502 and output stage 504 can include most any electrical circuits depending on the application. For example, system 500 can include fly-back and fly-forward converters that utilize energy stored in the magnetic field of an inductor and/or a transformer for low power applications. Further, system 500 can include a half bridge, full bridge and/or dual full bridge circuit for higher power applications.

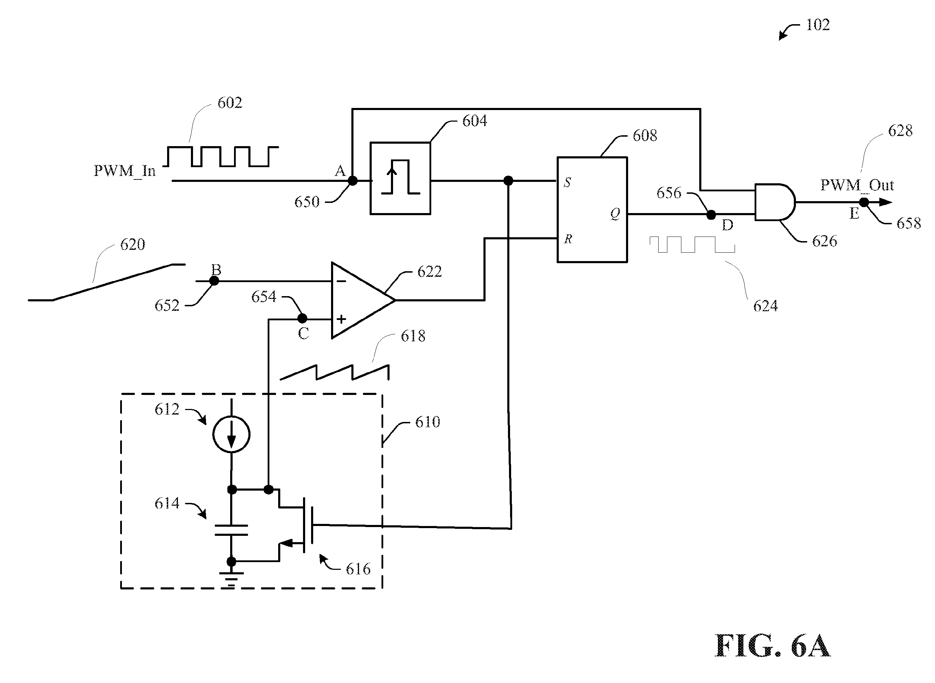

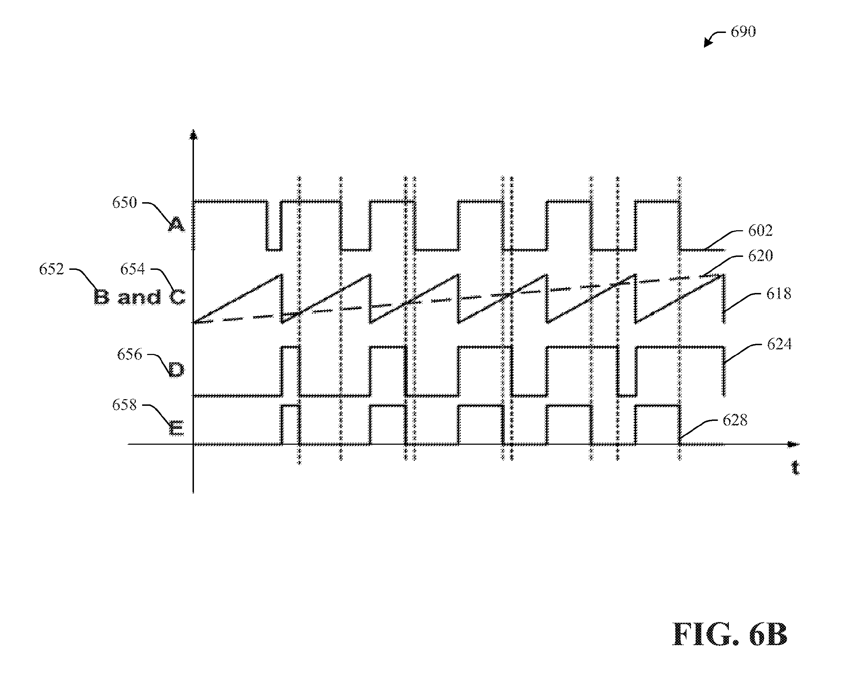

Referring to FIGs. 6A and 6B, there illustrated is an example soft start circuit 102 utilized to control the duty cycle of passive switch Q₂ 208 (in FIGs. 2, 4, and 5), and signal waveforms 690 at various nodes (650-658) in the soft start circuit 102. In one aspect the soft start circuit 102 reduces the large reverse transient inductor current during start-up and prevents damage to a bidirectional DC-DC converter system. Soft start circuit 102 is typically employed in most any bidirectional DC-DC converters that utilize switches (e.g., MOSFETs, bi-polar junction transistors (BJTs), *etc.).* In general, the soft start circuit 102 can ensure that the duty cycle of the passive switch is progressively increased from zero, during soft start of the active switch.

In one embodiment, the active and passive switches are driven by PWM signals that are inverted versions of each other. In other words, when the active switch is "ON" the passive switch is "OFF" and *vice versa.* During the soft start of the active switch, the duty cycle of the PWM signal driving the active switch gradually increases from zero to steady state over several cycles. Moreover, the soft start circuit 102 receives the inverted version 602 of this PWM signal at node A 650 and converts it to a PWM _Out signal 628 (at node E 658) that soft starts the passive switch.

According to an aspect, the inverted PWM_In signal 602 is applied at the input of a positive triggered one-shot circuit 604. The output of the one-shot circuit 604 is used to set a latch 608 (e.g., by feeding the output into the set pin of the latch). In one example the latch 608 can comprise a Set-Reset (SR) latch implemented by a set of cross-coupled logic gates *(e.g.,* NOR, NAND, *etc.).* In addition, the output of the one-shot circuit 604 can be provided to reset a saw-tooth signal generator 610. In one example, the saw-tooth signal generator 610 can be comprised of a constant current source 612 and a capacitor 614. Moreover, the constant current source 612 charges the capacitor 614 until the voltage across the capacitor is reset on the rising edge of the inverted PWM_In signal 602, by the utilizing the output of the one-shot circuit 604 to reset the switch 616. Accordingly, the voltage waveform at node C 654 will represent a sawtooth wave 618 and the signal 618 at node C 654 will be synced to the rising edge of the inverted PWM_In signal 602.

A soft start ramp 620, for example, utilized for soft starting the active switch, is received at node B 652 and is compared with the saw-tooth waveform 618 by employing comparator 622. Typically, the sawtooth signal 618 is provided to the non-inverting input terminal of the comparator 622, while the soft start ramp 620 is provided to the inverting input terminal of the comparator 622. Although comparator 622 is depicted as an operational amplifier (op-amp), it can be appreciated that most any electrical circuit for comparing/subtracting two or more input signals can be utilized. The output of the comparator 622 is employed to reset the latch 608. Further, the output 624 of the latch (at node D 656) is provided to an input of an AND gate 626. In addition, the inverted PWM_In signal 602 is provided to another input of the AND gate 626. Moreover, the output of the AND gate 626 provides a PWM _Out signal 628 at node E 658, wherein the duty cycle is controlled to limit the time that the passive switch is initially turned "ON."

As seen from the waveforms 690, the PWM _Out signal 628 at node E 658 is synchronized to the original inverted PWM_In signal 602 at node A 650. However, the duty cycle of the PWM _Out signal 628 gradually increases from zero to a steady state value. The PWM _Out signal 628 is utilized to drive the passive switch in the bidirectional DC-DC converters of FIGs. 1, 2, 4, and 5. Accordingly, during soft start of the active switch, the time for which the passive switch will remain turned "ON" is limited and gradually increased with each time period. Moreover, because the duty cycle of the passive switch increases gradually, in the same manner as the active switch, the inductor current changes smoothly and large reverse or transient inductor currents are avoided.

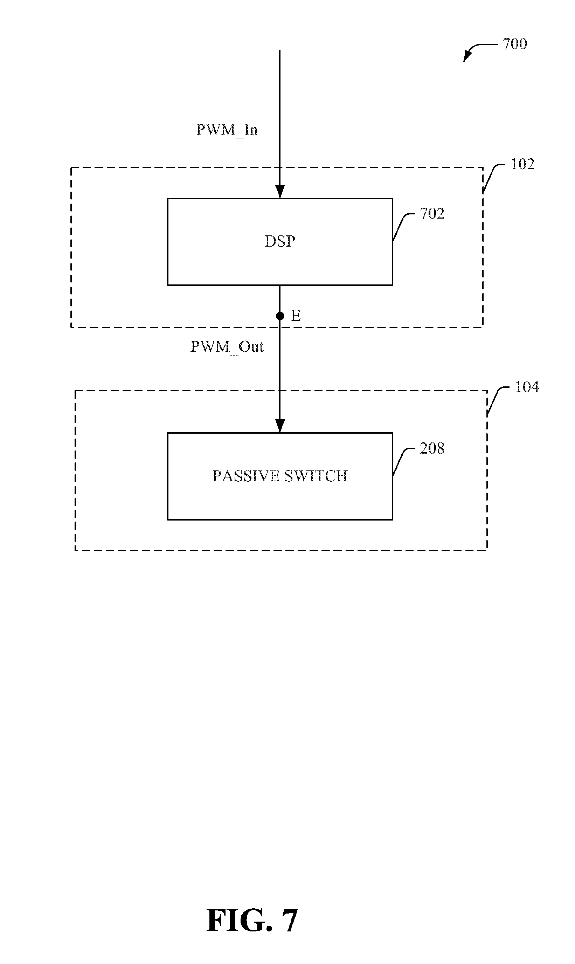

FIG. 7 illustrates an example system 700 that soft starts a passive switch 208 in a bidirectional DC-DC converter 104. The bidirectional DC-DC converter 104 can include isolated and/or non-isolated topologies comprising an active switch (as shown in FIGs. 2 and 4) and passive switch 208 (e.g., implemented by MOSFETs, BJTs, *etc.).* During power up and/or reset, the active switch is soft started, for example, the duty cycle of the active switch is slowly increased from zero to a steady state over several time periods. During this time, the operation of the passive switch 208 is controlled by the soft start circuit 102. According to an aspect, the soft start circuit 102 can include a digital signal processor (DSP) (e.g., a micro controller, micro processor, *etc.)* 702. Typically, DSP 702 can be utilized in lieu of the circuit 102 in FIG. 6A.

The DSP 702 can be programmed to generate a PWM _Out signal 628 (as shown in FIG. 6B) that can be utilized to soft start the passive switch 208. Initially, the PWM _Out signal limits the time that the passive switch is turned "ON" when the active switch is "OFF" and thereafter gradually increases the time for which the passive switch is turned "ON" with every time period, until a steady state is reached. In general, the operation of the passive switch 208 is controlled by the PWM _Out signal 628 on power-up/ reset, such that the passive switch 208 is soft started simultaneously or concurrently with the active switch. Moreover, since the passive switch's duty cycle increases over multiple time periods, in the same way as the active switch's duty cycle, negative current issue in the bidirectional converter 104 is prevented.

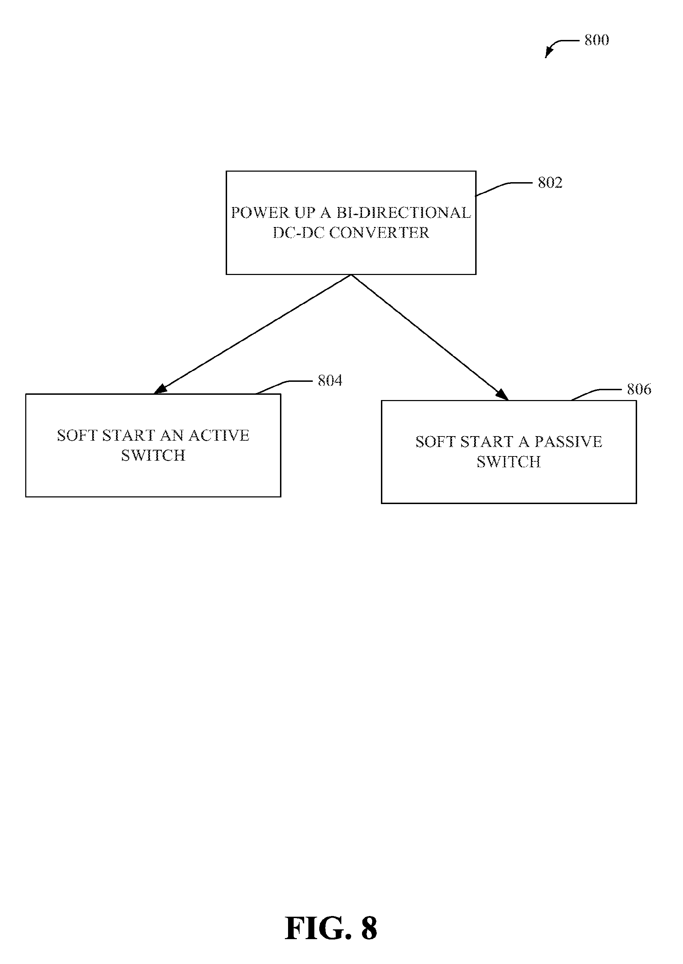

FIGs. 8-9 illustrate methodologies and/or flow diagrams in accordance with the disclosed subject matter. For simplicity of explanation, the methodologies are depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts may be required to implement the methodologies in accordance with the disclosed subject matter. In addition, those skilled in the art will understand and appreciate that the methodologies could alternatively be represented as a series of interrelated states *via* a state diagram or events. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device or computer-readable storage/communications media.

FIG. 8 illustrates an example methodology 800 for reducing negative transient current in bidirectional DC-DC converters in accordance with an aspect of the subject disclosure. Specifically, methodology 800 prevents generation of a large negative transient current that can damage the system and thus makes the system more robust. At 802, the bidirectional DC-DC converter can be powered up (e.g., switched "ON", reset, re-started, *etc.),* for example, manually or automatically (e.g., in response to an event). Typically, the bidirectional DC-DC converter can include most any isolated or non-isolated topology, such as, but not limited to buck, boost, buck-boost, Ćuk, charge pump, fly-back, fly-forward, half bridge, full bridge, dual full bridge, *etc.* topologies, and can be utilized in various applications, such as, but not limited to, industrial automation systems, automotive systems, robotics, *etc.*

In one aspect, the bidirectional DC-DC converter can comprise an active switch and a passive switch, for example, implemented by MOSFETs, BJTs, *etc.* At 804, the active switch can be soft started on power up. For example, a PWM signal can be employed to control the duty cycle of the active switch, such that the duty cycle is gradually increased from zero to a steady state value. Typically, the signal driving the passive switch is an inverted version of the PWM signal driving the active switch. However, substantially simultaneously to 804, at 806, the passive switch is soft started, such that the duty cycle of the passive switch is also increased gradually from zero to steady state. In one aspect, the inverted version of the PWM signal driving the active switch is processed to generate an output signal that restricts the time for which the passive switch is kept "ON" and gradually increases the time for which the passive switch is kept "ON" over multiple time periods. The output signal, employed to drive the passive switch, is synchronized to the inverted version of the PWM signal and progressively increased from zero to a steady state value. Moreover, initially the passive switch is "ON" only for a portion of the time that the active switch is "OFF", and over multiple time periods, the time that the passive switch is "ON" is gradually increased, until the passive switch is "ON" for the entire duration that the active switch is "OFF." Accordingly, both the active switch and the passive switch are soft started concurrently/simultaneously and thus inductor current changes smoothly without generating a large reverse or transient inductor current.

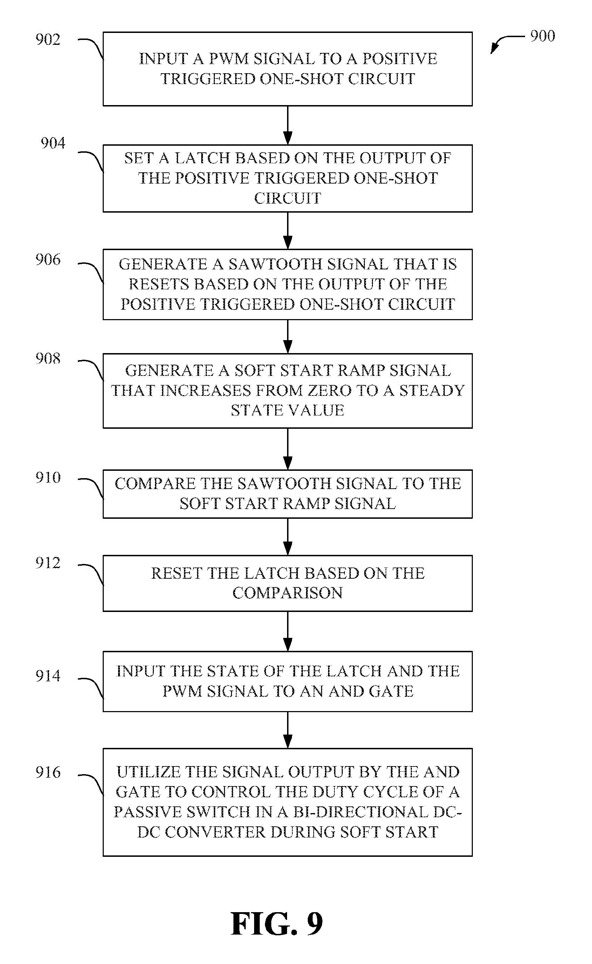

FIG. 9 illustrates an example methodology 900 for an improved soft start mechanism in bidirectional DC-DC converters, according to an aspect of the subject specification. Methodology 900 generates a soft start duty cycle to control a passive switch of the bidirectional DC-DC converter. Typically, the bidirectional DC-DC converter has an active switch and a passive switch, in which an active duty cycle of the active switch gradually increases from zero to a steady state value at start-up. As noted above, the operation of the active and passive switches is complimentary, such that the active switch is "OFF" when the passive switch is "ON" and the active switch is "ON" when the passive switch is "OFF."

At 902, a PWM signal is applied to a positive triggered one-shot circuit. Typically, the PWM signal has an inverted duty cycle of the active switch. At 904, a latch (e.g., SR latch) can be set based on the output of the positive triggered one-shot circuit. Accordingly, the latch is set on a leading/rising edge of an "ON" state of the inverted duty cycle. Further, at 906, a sawtooth signal can be generated based on the output of the positive triggered one-shot circuit. For example, the sawtooth signal resets on the leading/rising edge of the "ON" state of the inverted duty cycle. Furthermore, at 908, a soft start ramp signal that gradually increases from zero to a steady state value can be generated. At 910, the sawtooth signal and the soft start ramp signal can be compared. As an example, the soft start ramp signal can be subtracted from the sawtooth signal. Moreover, at 912, the latch can be reset based on the comparison. In one aspect, if the sawtooth signal equals or is greater than the soft start ramp signal, the latch can be reset.

At 914, the state of the output state of the latch and the PWM signal is input to an AND gate. The output from the AND gate provides a signal that is synchronized with the PWM signal and the duty cycle of the output signal progressively increases with each time period until a steady state duty cycle is reached. At 916, the signal output from the AND gate is utilized to control the duty cycle of the passive switch within the bidirectional DC-DC converter. For example, the waveform 628 (shown in FIG. 6B) is used as the duty cycle of the passive switch (instead of the inverted active duty cycle i.e. waveform 602 shown in FIG. 6B), such that the duty cycle of the passive switch increases gradually, in the same manner as the active switch, to avoid large reverse or transient inductor currents in the bidirectional converter.

Accordingly, the embodiments of the soft start scheme are not complex, enabling comparatively less intensive implementation when compared to the implementing of more complicated circuits. The soft start scheme solves the issue of negative current in bi-direction converters and prevents damage to the converter system from excess current.

What has been described above includes examples of the subject disclosure. It is, of course, not possible to describe every conceivable combination of components or methodologies for purposes of describing the subject matter, but one of ordinary skill in the art may recognize that many further combinations and permutations of the subject disclosure are possible. Accordingly, the claimed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.*, a functional equivalent), even though not structurally equivalent to the disclosed structure, which performs the function in the herein illustrated exemplary aspects of the claimed subject matter. Further, the components and circuitry elements described above can be of any suitable value in order to implement the embodiments of the present invention. For example, the capacitors can be of any suitable capacitance, inductors can be of any suitable inductance, amplifiers can provide any suitable gain, current sources can provide any suitable amperage, *etc.*

The aforementioned systems/circuits have been described with respect to interaction between several components. It can be appreciated that such systems/circuits and components can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components may be combined into a single component providing aggregate functionality or divided into several separate sub-components, and any one or more middle layers, such as a management layer, may be provided to communicatively couple to such sub-components in order to provide integrated functionality. Any components described herein may also interact with one or more other components not specifically described herein but generally known by those of skill in the art.

In addition, while a particular feature of the subject innovation may have been disclosed with respect to only one of several implementations, such feature may be combined with one or more other features of the other implementations as may be desired and advantageous for any given or particular application. Furthermore, to the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

## Claims

1. A system, comprising:
a PWM controller; and
a bidirectional direct current (DC)-to-DC converter operationally coupled to the PWM controller;
the bidirectional direct current (DC)-to-DC converter including a passive switch and an active switch; and
the PWM controller for generating an electrical signal, wherein the electrical signal soft starts the passive switch during a soft start of the active switch.

2. The system of claim 1, wherein the PWM controller comprises: a positive triggered one-shot circuit that receives as an input a signal having an inverted duty cycle in relation to the duty cycle of a signal controlling the active switch during the soft start.

3. The system of claim 2, wherein the PWM controller comprises: a latch coupled to an output of the positive triggered one-shot circuit, wherein the latch is set based on the output of the positive triggered one-shot circuit.

4. The system of claim 3, wherein the PWM controller comprises: a sawtooth signal generator, wherein a reset input of the sawtooth signal generator is coupled to the output of the positive triggered one-shot circuit.

5. The system of claim 4, wherein the sawtooth signal generator comprises:
a constant current source;
a capacitor coupled to the constant current source; and
a reset switch for discharging the capacitor.

6. The system of claim 4, wherein the PWM controller comprises: a comparator having a first input connected to an output of the sawtooth signal generator and a second input connected to a soft start ramp signal.

7. The system of claim 6, wherein an output of the comparator is connected to a reset input of the latch.

8. The system of claim 3, wherein the PWM controller comprises: an AND gate having a first input connected to an output of the latch, and a second input connected to the signal having the inverted duty cycle.

9. The system of claim 1, wherein the PWM controller comprises:
a digital signal processor (DSP) programmed to generate a digital signal; and
a digital to analog converter (DAC) for generating the electrical signal, wherein the electrical signal is based on the digital signal.

10. The system of claim 1, wherein the electrical signal drives the passive switch and causes a progressively large duty cycle of the passive switch starting from zero to a steady state value over a plurality of time periods, during the soft start of the active switch.

11. A method, comprising:
at least one of powering-up or restarting a bidirectional direct current (DC)-to-DC converter including an active and a passive switch; and
soft starting the passive switch simultaneously with the active switch.

12. The method of claim 11, further comprising: causing a progressively large duty cycle of the passive switch starting from zero to a steady state value over multiple time periods, during a soft start of the active switch.

13. The method of claim 11, further comprising: generating an electrical signal to control a duty cycle of the passive switch.

14. The method of claim 13, wherein the generating comprises:
setting a latch based on a rising edge of an inverted version of a signal driving the active switch during a soft start;
generating a sawtooth signal based on the rising edge of the inverted version of the signal driving the active switch during the soft start;
generating a soft start ramp signal;
subtracting the soft start ramp signal from the sawtooth signal;
resetting the latch based on the subtracted signal; and
generating the electrical signal based on a state of the latch and the inverted version of the signal driving the active switch during the soft start.

15. An apparatus for reducing negative inductor current, comprising:
a bidirectional direct current (DC)-to-DC converter including a passive switch and an active switch;
an inductor, within the bidirectional DC-to-DC converter that generates a negative current at startup; and
a soft start circuit for gradually increasing a time period during which the passive switch is turned ON, during a soft start of the active switch; wherein,
the gradually increasing the time period at least one of eliminates or reduces the negative current generated by the inductor during the soft start.
